Europäisches Patentamt

(19) European Patent Office   (11) Veröffentlichungsnummer: **0 178 586**

Office européen des brevets   **B1**

(12) **EUROPÄISCHE PATENTSCHRIFT**

(45) Veröffentlichungstag der Patentschrifft:   (51) Int. Cl. ⁵: **G 11 B   5/71**
07.02.90

(21) Anmeldenummer: **85112826.4**

(22) Anmeldetag: **10.10.85**

(54) **Magnetische Aufzeichnungsträger.**

(30) Priorität: **18.10.84 DE 3438092**

(43) Veröffentlichungstag der Anmeldung:
**23.04.86 Patentblatt 86/17**

(45) Bekanntmachung des Hinweises auf die Patenterteilung:
**07.02.90 Patentblatt 90/06**

㊽ Bennante Vertragsstaaten:
**DE FR GB NL**

(56) Entgegenhaltungen:
**FR-A-2 203 128**

(73) Patentinhaber: **BASF Aktiengesellschaft
Carl-Bosch-Strasse 38
D-6700 Ludwigshafen (DE)**

(72) Erfinder: **Kohl, Albert
Schloss-Strasse 26
D-6711 Laumersheim (DE)**
Erfinder: **Melzer, Milena
Kirchenstrasse 116
D-6700 Ludwigshafen (DE)**
Erfinder: **Lehner, August
Wachenheimer Strasse 4
D-6701 Roedersheim-Gronau (DE)**
Erfinder: **Schneider, Norbert
Madenburgstrasse 5f
D-6701 Altrip (DE)**
Erfinder: **Koester, Eberhard, Dr.
Max-Slevogt-Strasse 23
D-6701 Frankenthal (DE)**
Erfinder: **Balz, Werner, Dr.
Kropsburgstrasse 44
D-6703 Limburgerhof (DE)**
Erfinder: **Sommermann, Friedrich, Dr.
Grimmelshausenstrasse 9
D-7640 Kehl (DE)**
Erfinder: **Ricker, Ernst, Dr.
Rheinstrasse 4
D-7608 Willstaett (DE)**

# EP 0 178 586 B1

## Beschreibung

Die Erfindung betrifft magnetische Aufzeichnungsträger, bestehend aus einem nichtmagnetischen Trägermaterial und mindestens einer darauf haftfest aufgebrachten magnetisierbaren Schicht auf der Basis von in einem Polymerbindemittel, einem Gleitmittel und weiteren üblichen Zusatzstoffen feinverteilten magnetischen Material, welche sich durch verminderte Reibungskoeffizienten, verbessertes magnetisches Abriebverhalten im Feuchtklima und hohe Pegelstabilität auszeichnen.

Bei der Aufnahme und Wiedergabe von Signalen mittels magnetischer Aufzeichnungsträger, welche im Kontakt über den Magnetkopf geführt werden und zudem noch über Umlenkrollen, -bolzen oder andere Führungselemente bewegt werden, treten je nach Ausbildung der Schicht unter Umständen sehr hohe Reibungskräfte und häufig auch das sogenannte Rückgleiten oder Stick-Slip-Effekt auf. Außerdem stellt der Abrieb bei der Benutzung solcher Aufzeichnungsträger nicht nur hinsichtlich der Lebensdauer sondern auch bezüglich der Betriebssicherheit ein Problem dar. Es ist daher üblich, den Schichtzusammensetzungen von magnetischen Aufzeichnungsträgern Gleitmittel zuzusetzen. Als geeignete Gleitmittel sind beispielsweise Polydimethylsiloxane, Paraffinöle, Wachse, gesättigte und ungesättigte Fettsäuren, Fettsäureester, Fettsäureamide, Salze von Fettsäuren, sowie feste Schmierstoffe, wie Molybdänsulfid, Graphit, Polytetraethylenpulver und Polytrichlorfluorethylenpulver bereits beschrieben. Auch wird angegeben, daß flüssige bzw. pastenförmige Gleitmittel gegenüber den festen Gleitmitteln den Vorteil besitzen, die zu schmierende Oberflächen mit einem homogenen dünnen Oberflächenfilm zu bedecken, wobei die mengenmäßige Zugabe an Gleitmittel sehr gering gehalten werden muß, da sonst die Oberfläche leicht klebrig wird. Diese Gleitmittel können jedoch häufig nicht als alleiniges Gleitmittel verwendet werden und werden deshalb mit festen oder pastenförmigen Gleitmitteln kombiniert. Bei Verwendung der vorgenannten Gleitmitteln lassen sich bei vielen Anwendungsgebieten, insbesondere bei längerer Benetzungsdauer und ungünstigen Klimabedingungen weder das Sticken noch das Blocken und Verkleben der Bänder dauerhaft vermeiden. Auch läßt sich nicht verhindern, daß nach bereits kurzer Zeit die Bänder starke Abriebspuren zeigen, so daß die Wiedergabequalität besonders unter extremen Bedingungen merklich abnimmt.

Neben den genannten Schmiermitteln wurden auch solche aus tierischen und pflanzlichen Kohlenwasserstoffen vorgeschlagen. Die US-PS-3 144 352 beschreibt die Verwendung von Paraffinwachsen und in der US-PS-3 029 157 sind tierische und pflanzliche Fette als Schmiermittel bei Magnetogrammträgern eingesetzt. Aus der US-PS-3 492 235 ist es ferner bereits bekannt, Mischungen von Kohlenwasserstoffen und Estern als Schmiermittel in Magnetaufzeichnungsträgern zu verwenden. Die Zugabe von Estern von Fettsäuren und Monoalkoholen als Schmiermittel in Magnetaufzeichnungsträger, insbesondere Magnetbändern für die Aufzeichnung von Bildern, ist in der US-PS-3 274 111 offenbart. Dabei treten jedoch häufig Schwierigkeiten auf, die mit dem Ausschwitzen des Schmiermittels zusammenhängen. Diese Erscheinung des Ausschwitzens beruht darauf, daß viele handelsübliche Ester oder für die Herstellung dieser Ester verwendete Fettsäuren Mischungen von verschiedenen voneinander nur schwer zu trennenden Homologen darstellen, von denen einige bei der Verwendungstemperatur flüssig und andere fest sind.

In der DE-AS-2 250 382 wird die Gleitmittelkombination von Aminen mit Acrylsulfonsäuren, insbesondere die Kombination von Triethanolamindioleat mit Dodecylbenzolsulfonsäure beschrieben. Außerdem werden hierbei zusätzlich Weichmacher, die auch als Gleitmittel bekannt sind, zugesetzt. In den Beispielen wird jedoch gezeigt, daß die Wirkung nur in der beanspruchten Kombination erzielt wird, eine Verwendung der einzelnen Komponenten der Kombination bringt nicht, wie anhand von Vergleichsversuchen gezeigt ist, die erforderlichen Eigenschaften. Zwar zeigen die gemäß der DE-AS-2 250 382 hergestellten magnetischen Aufzeichnungsträger verbesserte Gleit- und Gleichlaufeigenschaften der insbesondere unter ungünstigen Klimaverhältnissen zeigen diese Aufzeichnungsträger die Neigung zum Schmieren, es entstehen Ablagerungen an den Bandführungselementen und die Korrosion ist deutlich erhöht. Besondere Schwierigkeiten treten aber beim Einsatz der vorgenannten Gleitmittelkombination bei Verwendung von wäßrigen Bindemittelsystemen auf, da sich diese wie die meisten der Gleitmittel nicht gleichmäßig einarbeiten lassen.

Diese vorgenannten hydrophoben Gleitmittel ziehen besonders in wäßrigem Medium aber auch in organischen Lösungsmitteln schlecht auf das magnetische Material auf und schwitzen, bei der benötigten hohen Dosiermenge besonders unter ungünstigen Klimabedingungen, z. B. hohe Temperatur und hohe Luftfeuchtigkeit im Dauerbetrieb leicht aus. Dadurch kommt es zu Ablagerungen an allen bandberührenden Teilen, besonders am Magnetkopf, wodurch sich Pegeleinbrüche ergeben.

Der Erfindung lag damit die Aufgabe zu Grunde, magnetische Aufzeichnungsträger, welche ein Gleitmittel in der Magnetschicht aufweisen, bereitzustellen, wobei das Gleitmittel einerseits schon in geringen Mengen hochwirksam ist, so daß damit die Magnetschicht nicht zu thermoplastisch wird und andererseits Pegeleinbrüche durch Ausschwitzen vermieden werden. Außerdem sollen durch das Gleitmittel insbesondere im Feuchtklima keine Ablagerungen verursacht sowie eine Korrosion vermieden werden und zudem soll das Gleitmittel sowohl in Bindemittelsystemen mit organischen Lösungsmitteln wie auch mit Wasser als Lösungsmittel verarbeitet werden können. Die Erfindung ist den Ansprüchen 1 - 3 ausgegeben

Das im erfindungsgemäßen magnetischen Aufzeichnungsträger enthaltene Gleitmittel besteht aus Triethanolamin bei dem eine, zwei oder drei Hydroxylgruppen mit Ölsäure verestert sind.

Es hat sich als besonders zweckmäßig herausgestellt, neben dem als Gleitmittel fungierenden mit Ölsäure veresterten Triethanolamin ein Polymerisat aus Polyetheracrylat und (Meth-)Acrylsäure als Dispergierhilfsmittel für die gleichmäßige Verteilung des magnetischen Materials im organischen Bindemittel zu verwenden. Das als Dispergiermittel eingesetzte Polymerisat wird hergestellt aus 25 bis 85 % eines Polyetheracrylesters mit 2 bis 10

2

Ethergruppen pro Doppelbindung und 15 bis 75 % Acrylsäure oder Methacrylsäure. Das Dispergierhilfsmittel kann in Wasser oder organischen Lösungsmitteln gelöst sein und als freie Säure oder neutralisiert vorliegen.

Die Zugabe des Gleitmittels erfolgt in einer Menge von 0,1 bis 2,0, vorzugsweise 0,2 bis 0,6 Gewichtsprozent, bezogen auf die Menge des magnetischen Materials, bereits zu Beginn der Dispergierung in den üblichen Maschinen zusammen mit den anderen Zusatzstoffen und mit einer für die Einstellung einer günstigen Viskosität ausreichenden Menge organischer Lösungsmittel bzw. Wasser. Es ist jedoch auch möglich, das Gleitmittel unmittelbar vor dem Vergießen der fertigen Magnetdispersion zuzuführen. Die Zumischzeit beträgt dann zweckmäßigerweise, je nach Intensität des eingesetzten Rührers, 10 Minuten bis 5 Stunden. Eine Beeinträchtigung durch die Zumischung des Gleitmittels unmittelbar vor der Beschichtung wurde nicht festgestellt.

Als magnetische Materialien werden bevorzugt feinteiliges stäbchenförmiges Gamma-Eisen(III)oxid mit einer durchschnittlichen Teilchengröße von 0,2 bis 2 µm und insbesondere von 0,1 bis 0,9 µm oder stäbchenförmiges Chromdioxid der gleichen Teilchenstruktur, wie beim Eisenoxid angegeben, verwendet. Weitere geeignete magnetische Materialien sind Gamma-Eisen(III)oxid mit Dotierungen von Schwermetallen, insbesondere von Kobalt sowie feinteilige Metallegierungen von Eisen, Kobalt und/oder Nickel.

Als Bindemittel für die Dispersion des feinteiligen magnetischen Materials können die für die Herstellung von Magnetschichten bekannten Bindemittel verwendet werden, wie ein in üblichen Lösungsmitteln lösliches Copolyamid, ein Polyvinylformal, ein Polyurethanelastomeres, Mischungen von Polyisocyanaten und höhermolekularen Polyhydroxylverbindungen oder Vinylchloridpolymerisate mit über 60 % an Vinylchlorid-Molekülbausteinen, z. B. ein Vinylchloridcopolymerisat mit einem oder mehreren Comonomeren, wie ein Vinylester einer Monocarbonsäure mit 2 bis 9 C-Atomen, oder ein Ester eines aliphatischen Alkohols mit 1 bis 9 C-Atomen und einer ethylenisch ungesättigten Carbonsäure mit 3 bis 5 C-Atomen, wie die Ester der Acrylsäure, Methacrylsäure oder Maleinsäure, oder ein Copolymer des Vinylchlorids mit einer oder mehreren dieser Carbonsäuren selbst als Comonomeren oder hydroxylgruppenhaltige Vinylchloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)-acrylat hergestellt werden können. Ferner sind als Bindemittel geeignet Abmischungen von einem oder mehreren Polyurethanelastomeren mit Polyvinylformalen, Phenoxyharzen und PVC-Copolymerisaten der oben angegebenen Zusammensetzung. Bevorzugte Bindemittel sind Polyvinylformal-Binder, Polyurethanelastomer-Abmischungen der genannten Art, vor allem Mischungen mit Polyvinylformalen. Als Polyurethanelastomer-Binder werden handelsübliche elastomere Polyesterurethane aus Adipinsäure, 1,4-Butandiol und 4,4'-Diisocyanatodiphenylmethan bevorzugt angewandt.

Ebenfalls vorteilhaft sind OH-gruppenhaltige Polyharnstoffurethanbindemittel, die mit Polyisocyanat vernetzt werden und wobei das OH-gruppenhaltige Polyharnstoffurethan durch Umsetzung eines Polydiols, eines Diols und eines primären oder sekundären Aminoalkohols und gegebenenfalls eines Triols mit einem Diisocyanat erhalten wird.

Magnetdispersionen, die sich besonders für die Herstellung von starren magnetischen Aufzeichnungsplatten eignen, enthalten bevorzugt Bindemittel wie Epoxidharze, Phenoxyharze, Aminoplast-Vorkondensate, Polyesterharze, Polyurethane oder Polyurethanbildner und Mischungen solcher Bindemittel miteinander als auch mit anderen Bindemitteln, wie Polycarbonaten oder Vinylpolymeren, z. B. Vinylchlorid- oder Vinylidenchlorid-Copolymere oder hitzehärtbare Acrylat- oder Methacrylat-Copolymere.

In gleicher Weise lassen sich als Bindemittel auch wäßrige Dispersionen organischer Polymerer verwenden. Besonders geeignet sind hierfür Polyurethanionomere, wie sie z. B. in den DE-OSen 2 920 334 und 3 005 009 beschrieben sind.

Den Dispersionen können weitere Zusatzstoffe zur Herstellung der Magnetschichten, beispielsweise geringe Monocarbonsäureanteile, Gemische oder Ester derselben sowie Füllstoffe, wie Ruß. Graphit, Quarzmehl und/oder nicht magnetisierbares Pulver auf Silicatbasis und Mittel zur Verbeserung des Verlaufs, wie geringen Mengen Silikonöl, zugesetzt werden. Diese Zusätze sollen zweckmäßigerweise insgesamt 12 Gewichtsprozent, bevorzugt 8 Gewichtsprozent, bezogen auf das Trockengewicht der Magnetschicht, nicht überschreiten.

Die Herstellung der Magnetschichten erfolgt in bekannter Weise. Hierzu wird das magnetische Material mit dem verwendeten Bindemittel und ausreichend Lösungsmittel in einer Dispergiermaschine, z. B. einer Topfkugelmühle oder einer Rührwerkskugelmühle, unter Zusatz des Copolymeren und gegebenenfalls der weiteren Zusatzstoffe dispergiert. Zur Einstellung des zweckmäßigen Bindemittel-Pigment-Verhältnisses können diese der Mischung entweder in festem Zustand oder in Form von 20- bis 60-%-igen Lösungen bzw. 30- bis 60-%-igen Dispersionen zugegeben werden. Es hat sich als zweckmäßig erwiesen, die Dispergierung solange fortzuführen, bis eine extreme feine Verteilung des magnetischen Materials erreicht ist, was 1 bis 3 Tage erfordern kann. Durch anschließendes wiederholtes Filtrieren erhält man eine völlig homogene Magnetdispersion.

Die Magnetdispersion wird nun mit Hilfe üblicher Beschichtungsmaschinen, z. B. mittels eines Linealgießers, auf den nichtmagnetisierbaren Träger aufgetragen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 4 bis 200 µm und insbesondere von 6 bis 36 µm. Bevor die noch flüssige Beschichtungsmischung auf dem Träger getrocknet wird, was zweckmäßigerweise bei Temperaturen von 50 bis 90°C während 2 bis 5 Minuten geschieht, werden anisotrope Magnetteilchen durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Temperaturen von 50 bis 100°C, vorzugsweise 60 bis 80°C, geglättet und verdichtet werden. Die Dicke der Magnetschicht beträgt im allgemeinen 1 bis 20 µm, vorzugsweise 2 bis 10 µm.

Die erfindungsgemäßen magnetischen Aufzeichnungsträger zeichnen sich gegenüber solchen nach dem Stand der Technik durch ein besonders gutes Reibungsverhalten der Bänder, durch äußerst geringen Abrieb beim Betrieb sowohl bei Normalklima als auch unter Feuchtwärmebedingungen sowie durch eine geringe Korrosionsneigung bei Zink und Aluminium aus. Darüber hinaus weisen die erfindungsgemäßen magnetischen Aufzeichnungsträger eine glatte Oberfläche, günstige Magnetwerte und insgesamt vorteilhafte elektroakustische Kenndaten auf.

Die Erfindung wird anhand der folgenden Beispiele im Vergleich zu Versuchen nach dem Stand der Technik näher erläutert. Die in den Beispielen und Vergleichsversuchen genannten Teile und Prozente beziehen sich, soweit nicht anderes angegeben ist, auf das Gewicht.

**Beispiel 1**

In einer Stahlkugelmühle von 6000 Volumenteilen Inhalt und einer Kugelfüllung von 8000 Teilen wurden 1200 Teile eines anisotropen magnetischen Eisenoxids mit einer Koerzitivfeldstärke von 26 kA/m und einer spezifischen Oberfläche von 20 $m^2$/g, 96 Teile einer 25-%-igen wäßrigen Lösung eines Copolymerisates auf Basis Methylpolyglykolacrylat/Methacrylsäure, 12 Teile eines handelsüblichen Siliconöls und 3,6 Teile Triethanolamindioleat zugesetzt und mit 840 Teilen Wasser 24 Stunden dispergiert. In diesen Ansatz wurden anschließend 750 Teile einer 40-%-igen Polyurethanionomerdispersion auf der Basis eines hydroxylgruppenhaltigen Polyesters, 4,4'-Diphenylmethandiisocyanat, Butandiol-1,4, Epikote-diacrylat, Mercaptoessigsäure und Triethylamin eingearbeitet. Mit der so erhaltenen Dispersion wurde nach dem Filtrieren mit Hilfe eines Linealgießers eine Polyethylenterephthalatfolie von 12 µm Dicke beschichtet. Vor der Trocknung bei 70 bis 90°C wurde die beschichtete Folie zur Ausrichtung der magnetischen Teilchen in der Schicht durch ein homogenes Magnetfeld geführt und danach erfolgte noch eine Glättung und Verdichtung der Schicht durch Kalandrieren bei 70°C. Die Dicke der getrockneten Schicht betrug 4,7 µm. Die so beschichtete Folie wurde in Bändern von 3,81 mm Breite geschnitten und damit handelsübliche Kassetten bestückt.

Die elektroakustischen Werte entsprechen der IEC I-Norm. Die Ergebnisse der mechanischen Messungen gemäß nachfolgender Tests sind in Tabelle 1 angegeben.

Test 1: Reibungskoeffizient Schicht/Stahl, vor/nach Dauerlauf

Die Bestimmung der Reibungszahlen erfolgt nach DIN 45 522, Blatt 1. Die Reibungskoeffizienten werden am unbenutzten Band und am durch Dauerlauf benutzten Band gemessen.

Test 2: Quasistatische Reibung

Die Reibungszahl wird durch Messen einer Zugkraft bestimmt, die ein über eine feststehende Meßtrommel geführtes Magnetband durch Reibung erzeugt. Die Meßtrommel ist eine Stahltrommel mit einer Oberflächenrauhigkeit von ca. 0,15 µm und einem Durchmesser von 70 mm. Das Bandstück ist 25 cm lang und wird bei einem Bandzug von 20 cN mit einer Geschwindigkeit von 1 mm/sec und einem Umschlingungswinkel von 180° über die Trommel geführt. Der Zug an der Meßdose F ist ein Maß für die Reibungszahl $\mu$ und zwar nach $\mu = 1/\pi \cdot \ln F/20$ (Prüfklima: 23°C, 50 %, rel. Feuchte).

Test 3: Dynamische Reibung

Die Reibungszahl wird entsprechend Test 2 durchgeführt, jedoch wird das Magnetband über eine sich mit einer Umfangsgeschwindigkeit von 9,5 cm/sec drehenden Meßtrommel geführt.

Test 4: Dauerlauf-Abrieb

Mit dieser Messung werden die Abriebeigenschaften eines Bandes beurteilt. Es wird der Abrieb in Form des Gewichtsverlustes einer Bandschleife in mg gemessen. Dabei beträgt die Schleifenlänge 95 cm, die Bandgeschwindigkeit 4 m/sec, der Bandzug 35 cN und die Laufzeit 1 Stunde, bei einer Umgebungstemperatur von 23°C und einer rel. Luftfeuchte von 50 %.

Test 5: Ablagerungstest

Auf einem Recorder werden jeweils 4 mit dem Magnetband gefüllte Kassetten bei 30°C und 93 % rel. Feuchte 20 Stunden lang auf Wiedergabe betrieben. Danach werden die Ablagerungen auf dem Löschkopf, dem Tonkopf und auf der Tonwelle visuell bewertet. Die Stärke der Ablagerungen werden in einer Notenskala (von Note 1: keine Ablagerung bis Note 6: sehr starke Ablagerung) festgehalten und der Mittelwert gebildet.

Test 6: Korrosionstest Zn/Al

Das Magnetband versacht im Recorder, je nach Rezeptur, durch Reibung an den bandberührenden Teilen mehr oder weniger Abrieb, der sich als Ablagerung an diesen Teilen teilweise oder ganz festsetzt. Begünstigt durch feuchtwarmes Klima können die vorhandenen Ablagerungen sowie das Magnetband selbst an den metalli-

schen Tonköpfen Korrosion veruraschen.

Zur Messung des Korrosionsverhaltens wird jeweils eine mit dem zu prüfenden Magnetband gefüllte handelsübliche Kassette 20 Stunden lang bei einer Temperatur von 30°C bei einer relativen Luftfeuchte von 93 % auf einem mit einem Tonkopfdummi aus Zink bzw. Aluminium ausgestatteten Recorder im Wiedergabebetrieb betrieben.

Die Ablagerungen auf den Tonkopfdummies werden visuell beurteilt. Die Korrosion und der Abtrieb werden getrennt bewertet. Die Abstufungen sind in einer Notenskala, die von 1 bis 6 reicht, festgelegt. Die Werte sind die Beurteilungen von Korrosion und Abtrieb von einem Gerät und dem dazugehörigen Kopfdummy.

**Beispiel 2**

Es wird wie in Beispiel 1 beschrieben verfahren, jedoch wurde das Triethanolamindioleat nicht vor der Dispergierung eingesetzt, sondern erst nach Fertigstellung der Dispersion mit einem schnellaufenden Rührwerk 30 Minuten intensiv eingemischt. Die Prüfergebnisse sind in Tabelle 1 angegeben.

**Vergleichsversuch 1**

Es wurde wie in Beispiel 1 beschrieben verfahren, jedoch wurde anstelle des Triethanolamindioleats die gleiche Menge Methylstearat zugesetzt. Die Prüfergebnisse sind in Tabelle 1 angegeben.

**Vergleichsversuch 2**

Es wurde wie in Beispiel 1 beschrieben verfahren, jedoch wurde anstelle des Triethanolamindioleats die gleiche Menge n-Butylstearat zugesetzt. Die Prüfergebnisse sind in Tabelle 1 angegeben.

**Vergleichsversuch 3**

Es wurde wie in Beispiel 1 beschrieben verfahren, jedoch wurde anstelle der 3,6 Teile Triethanolamindioleat eine Mischung aus 32,4 Teile Methyloleat, 16,0 Teile Triethanoldioleat und 25,6 Teile Tetrapropylenbenzolsulfonsäure in Anlehnung an Beispiel 1.3 der DE-AS-2 250 382 eingesetzt.

Dieses Gleitmittelgemisch läßt sich im wäßrigen Medium jedoch nur sehr schwer einarbeiten und wandert rasch an die Schichtoberfläche, wodurch beim Betrieb des Bandes die Magnetköpfe zugeschmiert wurden. Eine Prüfung der Bandeigenschaften war deshalb nicht möglich.

**Tabelle 1**

| | Beispiele | | Vergleichsversuch | |
|---|---|---|---|---|
| | 1 | 2 | 1 | 2 |
| Test 1 vor Dauerlauf | 0,32 | 0,30 | 0,48 | 0,52 |
| Test 1 nach Dauerlauf | 0,32 | 0,29 | 0,62 | 0,64 |
| Test 2 | 0,18 | 0,20 | 0,30 | 0,33 |
| Test 3 | 0,28 | 0,28 | 0,50 | 0,51 |
| Test 4 | 0,1 | 0,1 | 4,2 | 3,8 |
| Test 5 | 1,3 | 1,3 | 2,8 | 2,7 |
| Test 6a (Zn) | 1/1 | 1/1,5 | 2/4 | 2/5 |
| Test 6b (Al) | 1/1 | 1/1,5 | 2/4,5 | 2/5 |

**Beispiel 3**

In einer Stahlkugelmühle von 6000 Volumenteilen Rauminhalt, gefüllt mit 8000 Teilen Stahlkugeln von Durchmesser 4 bis 6 mm, wurde 900 Teile-Eisenoxid mit einer Koerzitivfeldstärke von 28,0 kA/m und einer spezifischen Oberfläche von 18 $m^2$/g zusammen mit 43 Teilen einer 50-%-igen Lösung von Copolymer Methylpolyglykolacrylat/Methacrylsäure in Tetrahydrofuran, zusammen mit 800 Teilen eines Lösungsmittelgemisches von gleichen Teilen Tetrahydrofuran und Dioxan und 390 Teile einer 20-%-igen Lösung eies Copolymers von Vinylchlorid, Dimethylmaleinat und Driethylmaleinat im Verhältnis 80/10/10 und einem K-Wert von 60 in oben genanntem Lösungsmittelgemisch eingefüllt und 40 Stunden lang dispergiert. Danach wurden 852 Teile einer 13-%-igen Lösung eines Polyesterpolyurethans vom K-Wert 60, hergestellt aus einem Polyester aus Butandiol und Adipinsäure (0,42 Mol), Butandiol (0,55 Mol), Trimethylolpropan (0,03 Mol) und Diphenylmethandiisocyanat (1,05 Mol) in einem Gemisch aus gleichen Teilen Tetrahydrofuran und Dioxan, 0,9 Teile Hydrochinon und 4,5 Teile Triethanolamindioleat zugesetzt. Daraufhin wurde der Ansatz nochmal 3 Stunden dispergiert. Die erhaltene Dispersion wurde unter Druck durch einen Filter mit 5 µm Poren filtriert und auf eine 12 µm dicke Polyethylenterephthalatfolie mittels eines üblichen Linealgießers aufgetragen. Die beschichtete Folie wurde nach Durchlaufen eines Magnetfeldes zum Ausrichten der Magnetteilchen bei Temperaturen zwischen 50 und 90°C getrocknet.

Nach der Trocknung wurde die Magnetschicht durch Hindurchziehen zwischen auf 70°C beheizten Walzen unter einem Liniendruck von 200 kp/cm verdichtet und geglättet, so daß die Dicke der Magnetschicht 4,5 µm betrug, und dann in 3,81 mm breite Bänder für Audioanwendung geschnitten. Die elektroakustischen Werte wurden gemäß DIN 45 401, DIN 45 403 und DIN 45 812 B1. 12 gegen das Bezugsband IEC I geprüft und entsprachen der Norm.

Die Prüfergebnisse der mechanischen Messungen sind in Tabelle 2 angegeben.

**Beispiel 4**

Es wurde wie in Beispiel 3 beschrieben verfahren, jedoch werden 10,17 Teile Triethanolamindioleat zugesetzt. Die Prüfergebnisse sind in Tabelle 2 angegeben.

**Vergleichsversuch 4**

Es wurde wie in Beispiel 3 beschrieben verfahren, jedoch wurde anstelle des Triethanolamindioleats gemäß den Angaben in der DE-AS-2 250 382 eine Mischung aus 24,3 Teilen Methyloleat, 10,17 Teile Triethanolamindioleat und 18,17 Teile Dodecylbenzolsulfonsäure zugesetzt. Die Prüfergebnisse sind in Tabelle 2 angegeben.

**Vergleichsversuch 5**

Es wurde wie in Beispiel 3 beschrieben verfahren, jedoch wurde anstelle des Triethanolamindioleats gemäß den Angaben in der DE-AS-2 250 382 eine Mischung aus 36,63 Teile Tetrahydrofurfuryloleat, 10,17 Teile Triethanolamindioleat und 6,03 Teile p-Toluolsulfonsäure zugesetzt. Die Prüfergebnisse sind in Tabelle 2 angegeben.

**Vergleichsversuch 6**

Es wurde wie in Beispiel 3 beschrieben verfahren, jedoch wurde anstelle des Triethanolamindioleats eine Mischung aus 2,7 Teile n-Butylstearat und 4,5 Teile Isostearinsäure zugesetzt. Die Prüfergebnisse sind in Tabelle 2 angegeben.

**Vergleichsversuch 7**

Es wurde wie in Beispiel 3 beschrieben verfahren, jedoch wurden anstelle des Triethanolamindioleats 4,5 Teile n-Butylstearat zugesetzt. Die Prüfergebnisse sind in Tabelle 2 angegeben.

**Vergleichsversuch 8**

Es wurde wie in Beispiel 3 beschrieben verfahren, jedoch wurde anstelle des Triethanolamindioleats eine Mischung aus 1,8 Teilen n-Butylstearat, 9 Teilen Isostearinsäure und 0,9 Teilen Siliconöl zugesetzt. Die Prüfergebnisse sind in Tabelle 2 angegeben.

**Tabelle 2**

| Test | Beispiel | | Vergleichsversuch | | | | |
|---|---|---|---|---|---|---|---|
| | 3 | 4 | 4 | 5 | 6 | 7 | 8 |
| 1 (vor Dauerlauf) | 0,31 | 0,30 | 0,40 | 0,40 | 0,46 | 0,48 | 0,40 |
| 2 | 0,22 | 0,25 | 0,44 | 0,26 | 0,30 | 0,30 | 0,25 |
| 3 | 0,31 | 0,34 | 0,55 | 0,36 | 0,38 | 0,35 | 0,36 |
| 5 | 2,0 | 2,3 | 3,8 | 2,5 | 5,0 | 5,0 | 3,5 |
| 6a (Zn) | 1,5/2 | 1/1 | 2/3,5 | 2/3 | 2/4,5 | 1,5/4,5 | 1,5/3,5 |
| 6b (Al) | 1,5/2 | 1/1 | 2/3 | 1,5/3 | 2/5 | 1,5/5 | 1,5/3,5 |

Wie die Vergleichsversuche 4 und 5, die auf der Basis der Angaben in der DE-AS-2 250 382 unter Verwendung von Triethanolamindioleat in Kombination mit Dodecylbenzolsulfonsäure bzw. p-Toluolsulfonsäure durchgeführt wurden, zeigen sich die resultierenden magnetischen Aufzeichnungsträger in ihren Eigenschaften deutlich schlechter im Vergleich zu den erfindungsgemäßen.

Die in den Vergleichsversuchen 6 und 7 verwendeten bekannten Gleitmittel, wie n-Butylstearat und Isostearinsäure führen zu deutlich schlechteren, zum Teil ungenügenden Reibungswerten, Abriebverhalten und auch der Bandoberfläche, Magnetwerten und elektroakustischen Daten. Durch Kombination von mehreren Gleitmitteln wie im Vergleichsversuch 8 können zwar die Bandeigenschaften verbessert werden, jedoch werden auch dann die guten Ergebnisse der Beispiele 3 und 4 nicht erreicht.

## Patentansprüche

1. Magnetische Aufzeichnungsträger, bestehend aus einem nichtmagnetischen Trägermaterial und mindestens einer darauf haftfest aufgebrachten magnetisierbaren Schicht auf der Basis von in einem Polymerbindemittel, einem Dispergierhilfsmittel, einem Gleitmittel und weiteren üblichen Zusatzstoffen feinverteilten magnetischen Material, dadurch gekennzeichnet, daß ein mit Ölsäure verestertes Triethanolamin in einer Menge von 0,1 bis 2,0 Gew.-%, bezogen auf die Menge an magnetischem Material, als alleiniges Gleitmittel und ein Polymerisat aus einem Polyetheracrylat und (Meth-)-acrylsäure als Dispergierhilfsmittel eingesetzt wird.

2. Magnetische Aufzeichnungsträger gemäß Anspruch 1 dadurch gekennzeichnet, daß die Gleitmittelmenge, bezogen auf das magnetische Material 0,1 bis 0,6 Gew.-% beträgt.

3. Magnetische Aufzeichnungsträger gemäß Anspruch 1, dadurch gekennzeichnet, daß das Gleitmittel Triethanolamindioleat ist.

## Claims

1. A magnetic recording medium which consists of a non-magnetic base and, bonded on top of this, one or more magnetizable layers based on magnetic material finely dispersed in a polymer binder, a dispersant, a lubricant and further conventional additives, wherein a triethanolamine esterified with oleic acid is used, as the sole lubricant, in an amount of from 0.1 to 2.0 % by weight, based on the amount of magnetic material, and a polymer of a polyetheracrylate and (meth)acrylic acid is used as the dispersant.

2. A magnetic recording medium as claimed in claim 1, wherein the amount of lubricant is from 0.1 to 0.6 % by weight, based on the magnetic material.

3. A magnetic recording medium as claimed in claim 1, wherein the lubricant is triethanolamine dioleate.

## Revendications

1. Support d'enregistrement magnétique, constitué d'un matériau support magnétique et d'au moins une couche magnétisable appliquée avec forte adhérence sur le matériau support et à base d'un matériau magnétique finement réparti dans un liant de polymère, un auxiliaire de dispersion, un lubrifiant et d'autres additifs usuels, caractérisé par le fait qu'est introduit, comme lubrifiant unique, une triéthanolamine estérifiée par de l'acide oléique, en proportion de 0,1 à 2,0 % en poids, rapportée à la quantité de matériau magnétique, et, comme auxiliaire de dispersion, un polymérisat d'un polyéthéracrylate et d'acide (méth)acrylique.

2. Support d'enregistrement magnétique selon la revendication 1, caractérisé par le fait que la proportion de lubrifiant, rapportée au matériau magnétique, est de 0,1 à 0,6 % en poids.

3. Support d'enregistrement magnétique selon la revendication 1, caractérisé par le fait que le lubrifiant est le dioléate de triéthanolamine.

7